# EUROPÄISCHE PATENTSCHRIFT

(11) **EP 2 433 835 B1**
(45) Veröffentlichungstag und Bekanntmachung des Hinweises auf die Patenterteilung: **12.11.2014**
(21) Anmeldenummer: 11007646.0
(22) Anmeldetag: 20.09.2011
(51) Int. Cl.: B60P 7/15

(54) **Ladebalken zum Festlegen und Verstellen in bzw. an einer Schiene in einem Laderaum**
Loading bar for setting and adjusting in or on a rail in a cargo space
Chargement barre pour régler et ajuster à l'intérieur ou sur un rail dans un espace de chargement

(30) Priorität: 23.09.2010 DE 102010037753
(43) Veröffentlichungstag der Anmeldung: 28.03.2012
(73) Patentinhaber: allsafe Jungfalk GmbH & Co. KG, 78234 Engen (DE)
(72) Erfinder: Stubbe, Ingolf, 78244 Gottmadingen (DE)
(74) Vertreter: Weiss, Peter

(56) Entgegenhaltungen:
- EP-A1- 0 130 663
- DE-A1-102008 039 648
- US-A1- 2007 224 010
- US-B1- 6 739 811

## Beschreibung

### Technisches Gebiet

Die Erfindung betrifft einen Ladebalken nach den Merkmalen des Oberbegriffs des Anspruchs 1.

### Stand der Technik

Aus dem Stand der Technik sind Ladebalken für Laderäume bekannt. In einem Laderaum, bspw. einem LKW, sind an den Wänden eine Mehrzahl von Schienen vorgesehen. Diese sind meist gegenüberllegend und parallel zueinander angeordnet. Zwischen zwei gegenüberliegenden Schienen kann oder können je nach Bedarf ein oder auch eine Mehrzahl von Ladebalken eingebracht werden. Meist werden die Ladebalken mit ihren Enden in den Schienen verrastet. Nachteiligerweise ist das Verstellen der Ladebalken in den Schienen sehr laut. Dies ist vor allem für Anwohner von Ladebereichen, bspw. an Geschäften oder in Hotels, sehr unangenehm. Derartige Ladebalken sind bspw. aus der DE 101 45 416 bekannt.

In der US 2007/0224010 A1 wird ein Ladebalken zum Verfahren und Festlegen in bzw. an einer Schiene in einem Laderaum gezeigt, der aus einer Lastaufnahme und zwei seitlichen, in den Schienen laufenden Schuhen besteht. Die Schuhe können an den waagrecht verlaufenden Schienen festgelegt werden.

Aus der EP 0 130 663 A1 ist ein Ladebalken bekannt, bei dem sich am Ende einer Lastaufnahme ein drehbarer Schuh befindet, der beim Drehen in entsprechende seitliche Ausnehmungen der Schiene eingreifen kann.

Aus der US 6 739 811 B1 ist ein Ladebalken bekannt, bei dem ein Schuh, welcher mit einer Lastklinke in einer Schiene festgelegt ist, über ein Zwischenstück mit einer Lastaufnahme verbunden ist, wobei dieses Zwischenstück, das mit dem Schuh gelenkig verbunden ist, in der Lastaufnahme etwa senkrecht zur Schiene verschiebbar ist.

### Beschreibung der Erfindung

Aufgabe der Erfindung ist es, einen Ladebalken zum Festlegen in einer Schiene in einem Laderaum zu schaffen, der sehr geräuscharm verstellt und auf einfache Art und Weise bedient werden kann.

Zur Lösung der Aufgabe führen die Merkmale des kennzeichnenden Teils des Anspruchs 1.

Ein Ladebalken zum Festlegen und Verstellen in bzw. an einer Schiene in einem Laderaum umfasst eine Lastaufnahme und einen Schuh, der in der Schiene läuft. Auf der Lastaufnahme wird das Ladegut, bspw. Paletten od. dgl., abgestellt.

Bevorzugt läuft ein äusserer Teil des Schuhs in der Schiene. Ein innerer Teil des Schuhs ist mit einem Spiel in der Lastaufnahme geführt.

Zweckmässigerweise umfasst der Schuh eine Lastklinke. Mittels der Lastklinke wird der Ladebalken in einer Systembohrung der Schiene festgelegt. Dazu durchgreift die Lastklinke den Schuh. Bei der Schiene handelt es sich bevorzugt um eine Airline-Schiene.

Vorzugsweise ist der Schuh des Ladebalkens gegenüber der Lastaufnahme relativ bewegbar. Bevorzugt ist die Lastaufnahme in Längsrichtung der Schiene bewegbar. Dadurch ergibt sich der Vorteil, dass die Lastaufnahme bei einer Belastung durch ein Ladegut gegenüber dem Schuh beweglich ist.

Zweckmässigerweise umfasst der Ladebalken einen Lastklinkenhebel der mit der Lastaufnahme und dem Schuh so in Verbindung steht, dass er bei einer Relativbewegung zwischen dem Schuh und der Lastaufnahme die Lastklinke in die Schiene drückt. Bevorzugt wird die Lastklinke in eine Systembohrung in der Schiene gedrückt. Dadurch wird der Ladebalken an der Schiene in einer gewünschten Höhe fixiert.

In typischen Ausführungsbeispielen ist die Lastklinke Über eine Lastklinkenfeder vorgespannt. Bevorzugt ist die Lastklinke in einer Führung, in die auch die Lastklinkenfeder eingebracht ist, geführt. Dadurch ergibt sich der Vorteil, dass der Ladebalken unbelastet nicht in der Schiene fixiert ist, sondern ohne weiteres leicht bewegt werden kann. Es wird verhindert, dass die Lastaufnahme durch ihr Eigengewicht nach unten fällt. Da die Lastklinke bei einem nicht belasteten Ladebalken vollständig aus der Schiene entfernt ist und nur der Schuh In der Schlene gleitet, ergibt sich des weiteren der Vorteil, dass der Ladebalken sehr geräuscharm verstellt werden kann.

Vorteilhafterweise ist der Ladebalken über eine Seilaufnahme mit einem Hubseil verbunden. Bevorzugt ist das Hubseil in der Schiene angeordnet. Dadurch ergibt sich der Vorteil, dass das Hubseil vor Beschädigungen geschützt Ist. Ein weiterer Vorteil ist, dass das Hubseil eine zusätzliche Sicherung für den Ladebalken darstellt, bspw. wenn die Lastklinke, die Lastklinkenfeder oder der Lastklinkenhebel defekt sind.

Zweckmässigerweise ist das Hubseil mit einem motorischen Antrieb verbunden, der geeignet ist, den Ladebalken entlang der Schiene zu verstellen. Dadurch ergibt sich der Vorteil, dass der Ladebalken oder auch eine Mehrzahl von Ladebalken auf einfache Art und Weise automatisch über den Antrieb verstellt werden können.

In typischen Ausführungsbeispielen umfasst der Ladebalken eine Sicherungsklinke. Dadurch ergibt sich der Vorteil, dass bspw. bei einem Hubseilbruch oder einer defekten Lastklinke, Lastklinkenfeder oder Lastklinkenhebel, der belastete Ladebalken trotzdem in der gewünschten Höhe in der Schiene gehalten wird und nicht nach unten fällt.

Bevorzugt ist die Sicherungsklinke dazu geeignet, in die Schiene, insbesondere in eine Systembohrung der Schiene, einzurasten.

Zweckmässlgerweise Ist die Sicherungsklinke mit der Seilaufnahme verbunden. Dadurch ergibt sich der Vorteil, dass bei einem Seilbruch die Seilaufnahme entlastet wird und zulässt, dass die Sicherungsklinke in die Schiene eingreift und den Ladebalken gegen ein nach Unten-Fallen oder Rutschen sichert.

Vorzugsweise ist die Sicherungsklinke und/oder die Seilaufnahme, Insbesondere über ein Gelenk, mit dem Lastklinkenhebel verbunden. Dadurch ergibt sich der Vorteil, dass bei einer Fehifunktion der Lastklinke auch die Sicherungsklinke betätigt wird.

In typischen Ausführungsbeispielen ist die Sicherungsklinke mit einer Sicherungsklinkenfeder vorgespannt. Dadurch ergibt sich der Vorteil, dass verhindert wird, dass die Sicherungsklinke bei einem unbelasteten Ladebalken in der Schiene einrastet und diese festlegt. Dies ist wichtig, um zu gewährleisten, dass der Ladebalken geräuscharm verstellt werden kann, Erst durch eine Last auf der Lastaufnahme und wenn durch einen Hubseilbruch oder eine defekte Lastklinke die Sirherungsklinke freigegeben wird, kann die Vorspannung der Sicherungsklinkenfeder überwunden werden. Bei einem Seilbruch oder einer defekten Lastklinke wird die Sicherungsklinke in die Schiene bzw. eine Systembohrung in der Schiene gedrückt.

Vorteilhafterweise sind in dem Laderaum eine Mehrzahl von Schienen vorgesehen. Bevorzugt sind jeweils zwei Schienen gegenüberilegend angeordnet. Zwischen den gegenüberliegenden Schienen ist zumindest ein Ladebalken eingebracht. Zweckmässigerweise können auch eine Mehrzahl von Ladebalken zwischen zwei gegenoberliegenden Schienen eingebracht sein.

In allen parallel zueinander verlaufenden Schienen sind bevorzugt eine Mehrzahl von Endschaltern, besonders bevorzugt in vorbestimmten Höhen, angeordnet. Zweckmässigerweise sind die Antriebe für die einzelnen Schienen und Ladebalken so mit den Endschaltern verbunden, dass alle Ladebalken mittels eines Bedienvorgangs auf eine gewünschte Höhe eingestellt werden können. Dadurch ergibt sich der Vorteil, dass eine Mehrzahl der in einem Laderaum vorhandenen Ladebalken synchron verstellt werden können.

Gesondert wird Schutz beansprucht für ein Ladungssicherungssystem mit zumindest einem Ladebalken nach einem der genannten Merkmale und einer Mehrzahl von Schienen, die in einem Laderaum angeordnet sind, wobei die Mehrzahl der Schienen einander zugeordnete Endschalter aufweisen, um vorbestimmte Beladepositionen zu markieren bzw. einstellen zu können.

### Kurze Beschreibung der Zeichnungen

Nachfolgend wird die Erfindung anhand der beiliegenden Figuren kurz beschrieben, wobei die Figuren zeigen:
Figur 1 zeigt eine schematische Darstellung eines Ausschnitts eines offenen Ladebalkens in einer Ausgangstellung ohne Last;
Figur 2 zeigt eine schematische Darstellung eines Ausschnitts eines offenen belasteten Ladebalkens;
Figur 3 zeigt eine weitere schematische Darstellung eines Ausschnitts eines offenen belasteten Ladebalkens bei einem gebrochenen Hubseil.

### Ausführungsbeispiel

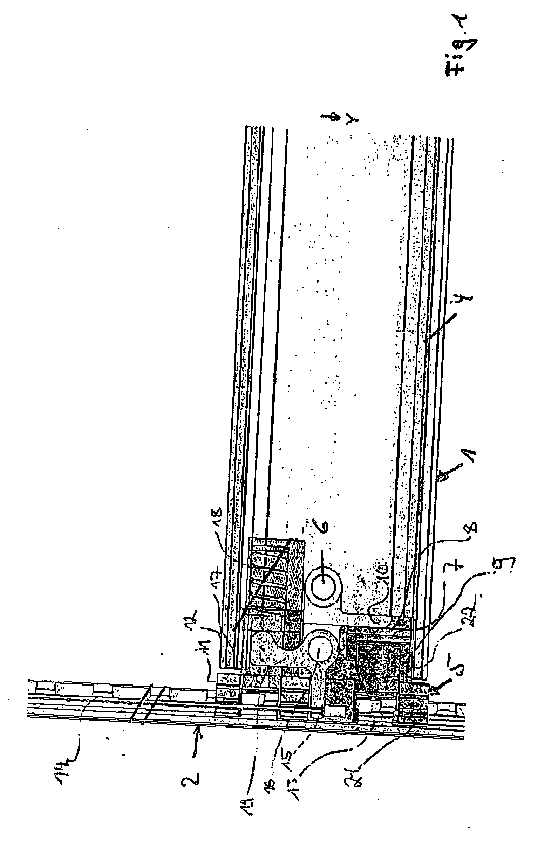

Figur 1 zeigt einen Ladebalken 1, der an einer Schiene 2 in einem Laderaum, vertikal verfahrbar angeordnet ist.

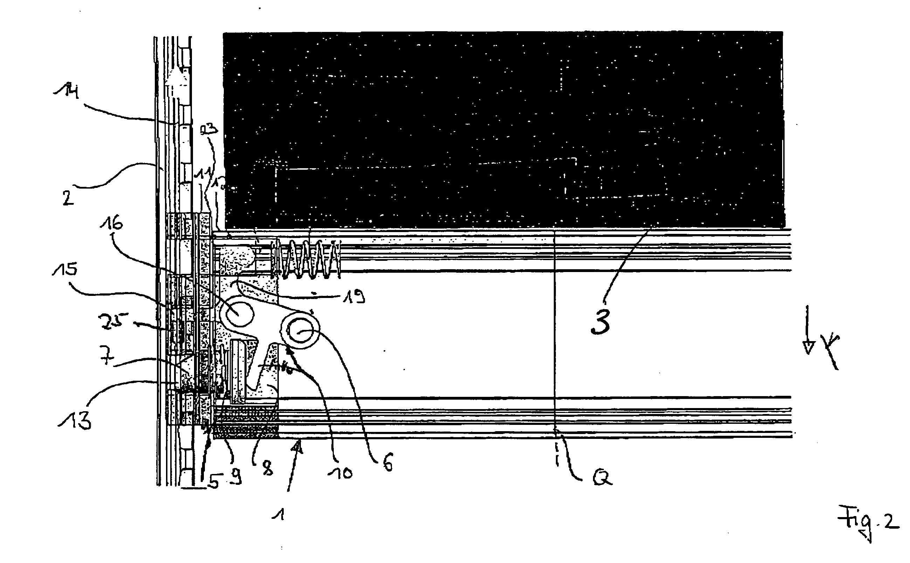

Der Ladebalken 1 umfasst eine Lastaufnahme 4 und einen Schuh 5. Da der Ladebalken 1 nicht belastet ist, liegen eine Kante 11 des Schuhs 5 und eine Aufnahmefläche 12 der Lastaufnahme 4 in etwa auf einer Höhe. Die Lastaufnahme 4 ist bevorzugt ein als Hohlprofil ausgebildeter Querbalken, auf dem ein Last 3, siehe Figur 2, abgestellt werden kann.

Der Schuh 5 weist einen äusseren Teil 21, der in die Schiene 2 eingreift, und einen inneren Teil 22 auf. Der innere Teil 22 ist in der Lastaufnahme 4 mit einem Spiel geführt. Dadurch ist die Lastaufnahme 4 gegenüber dem Schuh 5 in Pfeilrichtung Y verschiebbar.

Des Weiteren umfasst der Ladebalken 1 eine Lastklinke 7. Die Lastklinke 7 ist in einer Führung 8 in dem inneren Teil 22 des Schuhs 5 des Ladebalkens 1 angeordnet. Mit einer Lastklinkenfeder 9 ist die Lastklinke 7 gegenüber dem Schuh 5 vorgespannt, so dass die Lastklinke 7 nicht bereits durch das Eigengewicht der Lastaufnahme 4 in eine Sicherungsöffnung 13 der Schiene 2 gedrückt wird, Über einen Lastklinkenhebel 10 steht die Lastklinke 7 mit der Lastaufnahme 4 in Verbindung. Der Lastklinkenhebel 10 Ist über ein Gelenk 6 mit der Lastaufnahme 4 verbunden und weist eine weitere gelenkige Verbindung 16 mit der Führung 8 des Schuhs 5 auf. Vom Lastklinkenhebel 10 ragt ein Druckstück 26 ab, welches die Lastklinke 7 mit Druck beaufschlagen kann.

Die Funktionsweise der Erfindung ist folgende:
Wird die Lastaufnahme 4 des Ladebalkens 1 mit der Last 3 belastet, wird die Lastaufnahme 4 gegenüber dem Schuh 5 in Pfeilrichtung Y nach unten verschoben, bis eine Oberkante 23 des inneren Teils 22 des Schuhs 5 an einer Innenseite 24 der Lastaufnahme 4 anliegt, wie in Figur 2 dargestellt. Dabei wird der Lastklinkenhebel 10 um das Gelenk 6 gedreht und drückt so auf die Lastklinke 7, dass diese in die Sicherungsöffnung 13 in der Schiene 2 einfährt. Dadurch wird der Ladebalken 1 an der Schiene 2 fixiert. Dieser Vorgang findet auch an dem nicht dargestellten anderen Ende des Ladebalkens 1 statt.

Wird die Lastaufnahme 4 des Ladebalkens 1 wieder entlastet, so gibt der Lastklinkenhebel 10 die Lastklinke 7 frei und diese gleitet unter dem Druck der Lastklinkenfeder 9 wieder aus der Sicherungsöffnung 13. Dann kann der Ladebalken 1 geräuscharm in der Schiene 2 verstellt werden.

Das Verstellen des Ladebalkens 1 ist manuell im unbelasteten Zustand möglich, soll aber bevorzugt elektromotorisch erfolgen.

Zum Verstellen des Ladebalkens 1 ist ein Hubseil 14, wie in den Figuren 1 und 2 gezeigt, das mit einem nicht dargestellten Antrieb verbunden ist, vorgesehen, Das Hubseil 14 ist über eine Seilverbindung 15 mit dem Ladebalken 1 verbunden, wobei das Hubseil 14 mit einem Gegenlager 25 die Seilverbindung 15 umgreift.

Im unbelasteten Zustand kann der Ladebalken 1, wenn die Lastklinke 7 nicht in eine Sicherungsöffnung 13 in der Schiene 2 eingreift, über das Hubseil 14 in einer Höhe entlang der Schiene 2 verstellt werden.

Die Seilverbindung 15 durchgreift den Schuh 5 und ist an dem Gelenk 16 angeordnet. Zusätzlich ist für die Sellaufnahme 15 ein nicht dargestellter Anschlag vorgesehen, der eine Bewegung der Seilaufnahme 15 entgegen der Pfeilrichtung Y nach oben begrenzt.

Als Sicherungssystem, bspw. für den Fall eines Bruchs des Hubseils 14, weist der Ladebalken 1, wie auch in Figur 1 dargestellt, eine Sicherungsklinke 17 auf. Die Sicherungsklinke 17 Ist mittels einer Sicherungsklinkenfeder 18 gegenüber der Lastaufnahme 4 vorgespannt. Über einen Sicherungsklinkenhebel 19 ist die Sicherungsklinke 17 mit der Seilaufnahme 15 und dem Gelenk 16 verbunden. Das funktionierende Hubseil 14 hält die Seilaufnahme 15 und damit auch den Sicherungsklinkenhebel 17 so gegen die Sicherungsklinkenteder 18, dass diese die Sicherungsklinke 17 nicht in die Schiene 2 drücken kann.

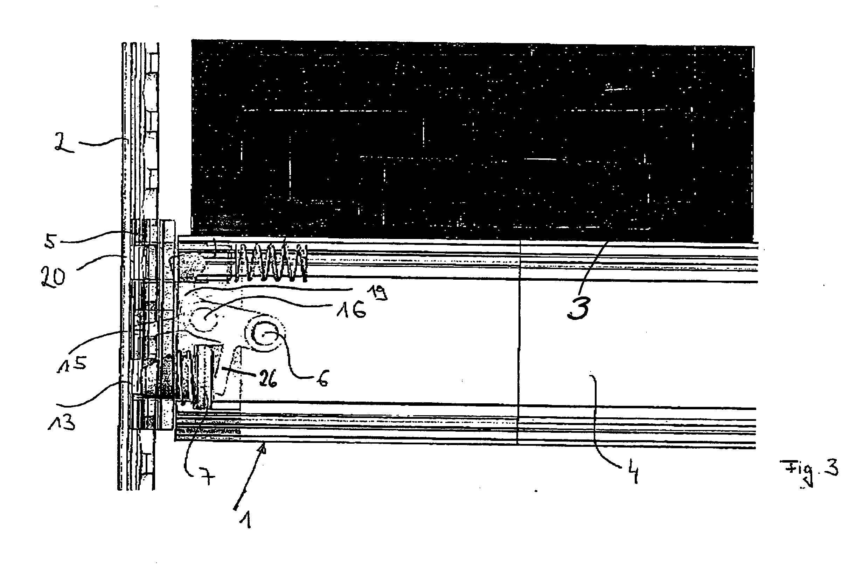

Figur 3 zeigt den mit der Last 3 belasteten Ladebalken 1 bei dem das Hubseil 14 gerissen ist. Das Hubseil ist nicht dargestellt. Da die Lastaufnahme 4 mit der Last 3 belastet ist, ist die Lastklinke 7, wie zu Figur 2 beschrieben, in die Sicherungsöffnung 13 der Schiene 2 gedrückt und fixiert den Ladebalken 1, Als zusätzliche Sicherung wird nach einem Hubseilbruch die Sellaufnahme 15 freigegeben. Dabei dreht sich der Sicherungsklinkenhebel 19 um das Gelenk 16 und erlaubt so, dass die Sicherungsklinkenfeder 18, die Sicherheitsklinke 17 in eine weitere Systembohrung 20 der Schiene 2 drückt. Dadurch wird der Ladebalken 1 zusätzlich fixiert. Dieser Sicherungsmechanismus läuft analog bei einem unbelasteten Ladebalken ab. Allerdings ist dann die Lastklinke 7 nicht in die Schiene gedrückt, sondern die Sicherungsklinke ist allein wirksam.

**Bezugszeichenliste**

| | | | | | |
|---|---|---|---|---|---|
| 1 | Ladebalken | 34 | | 67 | |
| 2 | Schiene | 35 | | 68 | |
| 3 | Last | 36 | | 69 | |
| 4 | Lastaufnahme | 37 | | 70 | |
| 5 | Schuh | 38 | | 71 | |
| 6 | Gelenk | 39 | | 72 | |
| 7 | Lastklinke | 40 | | 73 | |
| 8 | Führung | 41 | | 74 | |
| 9 | Lastklinkenfeder | 42 | | 75 | |
| 10 | Lastklinkenhebel | 43 | | 76 | |
| 11 | Kante | 44 | | 77 | |
| 12 | Aufnahmefläche | 45 | | 78 | |
| 13 | Sicherungsöffnung | 46 | | 79 | |
| 14 | Hubseil | 47 | | | |
| 15 | Seilaufnahme | 48 | | | |
| 16 | Gelenk | 49 | | | |
| 17 | Sicherungsklinke | 50 | | | |
| 18 | Sicherungsklinkenfeder | 51 | | | |
| 19 | Sicherungsklinkenhebel | 52 | | | |
| 20 | Systembohrung | 53 | | | |
| 21 | äusserer Tell | 54 | | Y | Pfeilrichtung |
| 22 | innerer Teil | 55 | | | |
| 23 | Oberkante | 56 | | | |
| 24 | Innenkante | 57 | | | |
| 25 | Gegenlager | 58 | | | |
| 26 | Druckstück | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Ladebalken (1) zum Verfahren und Festlegen in bzw. an einer Schiene (2) in einem Laderaum,
mit einer Lastaufnahme (4) zum Aufnehmen einer Last (3),
einem Schuh (5), der in der Schiene (2) läuft und
einer Lastklinke (7),
wobei der Schuh (5) und die Lastaufnahme (4) relativ zueinander bewegbar sind,
**dadurch gekennzeichnet daß** der Schuh (5) gegenüber der Lastaufnahme (4) verschiebbar ist und einen Lastklinkenhebel (10), der bei einer Relativbewegung zwischen dem Schuh (5) und der Lastaufnahme (4), die in Längsrichtung der Schiene (2) bewegbar ist, bei Belastung durch die Last (3) die Lastklinke (7) in bzw. an der Schiene (2) fixiert.

2. Ladebalken nach Anspruch 1, **dadurch gekennzeichnet, dass** die Lastklinke (7) über eine Lastklinkenfeder (9) vorgespannt ist.

3. Ladebalken nach Anspruch 1 oder 2, **dadurch gekennzeichnet, dass** der Lastklinkenhebel (10) eine gelenkige Verbindung (6) mit der Lastaufnahme (4) eingeht.

4. Ladebalken nach einem der Ansprüche 1 bis 3, **dadurch gekennzeichnet, dass** der Lastklinkenhebel (10) eine gelenkige Verbindung (16) mit dem Schuh (5) eingeht.

5. Ladebalken nach Anspruch 4, **dadurch gekennzeichnet, dass** an dem Lastklinkenhebel (10) zwischen den beiden Gelenken (6, 16) ein Druckstück (26) vorgesehen ist, welches die Lastklinke (7) mit Druck beaufschlagt.

6. Ladebalken nach einem der vorhergehenden Ansprüche, **dadurch gekennzeichnet, dass** der Ladebalken (1) über eine Seilaufnahme (15) mit einem Hubseil (14) verbunden ist.

7. Ladebalken nach Anspruch 6, **dadurch gekennzeichnet, dass** das Hubseil (14) mit einem Antrieb verbunden ist, geeignet den Ladebalken (1) entlang der Schiene (2) zu verstellen.

8. Ladebalken nach einem der vorhergehenden Ansprüche, **dadurch gekennzeichnet, dass** der Ladebalken (1) eine Sicherungsklinke (17) umfasst.

9. Ladebalken nach Anspruch 8, **dadurch gekennzeichnet, dass** die Sicherungsklinke (17) mit der Seilaufnahme (15) verbunden ist.

10. Ladebalken nach Anspruch 8 oder 9, **dadurch gekennzeichnet, dass** die Sicherungsklinke (17) und/oder die Seilaufnahme (15) über das Gelenk (16) mit dem Lastklinkenhebel (10) und/oder einem Sicherungsklinkenhebel (19) verbunden ist.

11. Ladebalken nach einem der vorhergehenden Ansprüche, **dadurch gekennzeichnet, dass** die Sicherungsklinke (17) mit einer Sicherungsklinkenfeder (18) vorgespannt ist.

12. Ladungssicherungssystem mit zumindest einem Ladebalken (1) nach einem der vorhergehenden Ansprüche und einer Mehrzahl von Schienen (2), **dadurch gekennzeichnet, dass** die Mehrzahl der Schienen (2) einander zugeordnete Endschalter aufweisen, um vorbestimmte Beladepositionen zu markieren.

## Claims

1. A load bar (1) for moving and securing in or on a rail (2) in a cargo space,
having a load receiver (4) for receiving a load (3),
a shoe (5) which runs in the rail (2) and
a load catch (7),
wherein the shoe (5) and the load receiver (4) are movable relative to one another,
**characterized in that** the shoe (5) is displaceable with respect to the load receiver (4), and
a load catch lever (10) which upon relative motion between the shoe (5) and the load receiver (4), movable in the longitudinal direction of the rail (2), fixes the load catch (7) in or on the rail (2) upon loading by the load (3).

2. A load bar according to claim 1, **characterized in that** the load catch (7) is pre-tensioned via a load catch spring (9).

3. A load bar according to claim 1 or 2, **characterized in that** the load catch lever (10) enters into an articulated connection (6) with the load receiver (4).

4. A load bar according to any one of claims 1 to 3, **characterized in that** the load catch lever (10) enters into an articulated connection (16) with the shoe (5).

5. A load bar according to claim 4, **characterized in that** a pressure piece (26) is provided at the load catch lever (10) so as to be between the two articulations (6, 16) and acts upon the load catch (7) with pressure.

6. A load bar according to any one of the preceding claims, **characterized in that** the load bar (1) is connected to a lifting cable (14) via a cable receiver (15).

7. A load bar according to claim 6, **characterized in that** the lifting cable (14) is connected to a drive suitable for displacing the load bar (1) along the rail (2).

8. A load bar according to any one of the preceding claims, **characterized in that** the load bar (1) comprises a safety catch (17).

9. A load bar according to claim 8, **characterized in that** the safety catch (17) is connected to the cable receiver (15).

10. A load bar according to claim 8 or 9, **characterized in that** the safety catch (17) and/or the cable receiver (15) is/are connected via the articulation (16) to the load catch lever (10) and/or a safety catch lever (19).

11. A load bar according to any one of the preceding claims, **characterized in that** the safety catch (17) is pre-tensioned by a safety catch spring (18).

12. A load securing system having at least one load bar (1) according to any one of the preceding claims and a plurality of rails (2), **characterized in that** the plurality of rails (2) have limit switches associated with one another, in order to mark predetermined loading positions.

## Revendications

1. Barre de chargement (1) pour déplacer et er dans ou sur un rail (2) dans un espace de chargement,
avec un moyen de réception de charge (4) destiné à recevoir une charge (3),
un patin (5) qui se déplace dans le rail (2), et
une poignée à charge (7),
le patin (5) et le moyen de réception de charge (4) étant déplaçables l'un par rapport à l'autre,
**caractérisée par le fait que**
le patin (5) est déplaçable par rapport au oyen de réception de charge (4), et
un levier de poignée à charge (10) qui, en cas de déplacement relatif entre le patin (5) et le moyen de réception de charge (4) déplaçable dans la direction longitudinale du rail (2), fixe, en cas de sollicitation par la charge (3), la poignée de charge (7) dans ou sur le rail (2).

2. Barre de chargement selon la revendication 1, **caractérisée par le fait que** la poignée de charge (7) est précontrainte par l'intermédiaire d'un ressort de poignée de charge (9).

3. Barre de chargement selon la revendication 1 ou 2, **caractérisée par le fait que** le levier de poignée de charge (10) établit une connexion articulée (16) avec le moyen (4) de réception de charge.

4. Barre de chargement selon l'une des revendications 1 à 3, **caractérisée par le fait que** le levier de poignée de charge (10) établit une connexion articulée (16) avec le sabot (5).

5. Barre de chargement selon la revendication 4, **caractérisée par le fait que** sur le levier de poignée de charge (10) est prévue, entre les deux articulations (16, 6), une pièce de pression (26) qui soumet la poignée de charge (7) à une pression.

6. Barre de chargement selon l'une des revendications précédentes, **caractérisée par le fait que** la barre de chargement (1) est connectée, par l'intermédiaire d'un dispositif de réception de câble (15), à un câble de levage (14).

7. Barre de chargement selon la revendication 6, **caractérisée par le fait que** le câble de levage (14) est connecté à un entraînement à même de déplacer la barre de chargement (1) le long du rail (2).

8. Barre de chargement selon l'une des revendications précédentes, **caractérisée par le fait que** la barre de chargement (1) comporte une poignée de sûreté (17).

9. Barre de chargement selon la revendication 8, **caractérisée par le fait que** la poignée de sûreté (17) est connectée au dispositif de réception de câble (15).

10. Barre de chargement selon la revendication 8 ou 9, **caractérisée par le fait que** la poignée de sûreté (17) et/ou le dispositif de réception de câble (15) sont connectés, par l'intermédiaire de l'articulation (16), au levier de poignée de charge (10) et/ou à un levier de poignée de sécurité (19).

11. Barre de chargement selon l'une des revendications précédentes, **caractérisée par le fait que** la poignée de sûreté (17) est précontrainte par un ressort de poignée de sûreté (18).

12. Système de sûreté de chargement avec au moins une barre de chargement (1) selon l'une des revendications précédentes et une pluralité de rails (2), **caractérisé par le fait que** la pluralité de rails (2) résentent des interrupteurs de fin de course associés l'un à l'autre pour marquer des positions de chargement prédéterminées.
